# EUROPEAN PATENT SPECIFICATION

(11) **EP 1 264 676 B1**
(45) Date of publication and mention of the grant of the patent: **05.09.2007**
(21) Application number: 02009106.2
(22) Date of filing: 24.04.2002
(51) Int. Cl.: B29C 45/14, B65D 1/36, B65D 77/24

(54) **Method for producing a food package**
Verfahren zur Herstellung einer Lebensmittelverpackung
Procédé de fabrication d'un emballage pour produits alimentaires

(30) Priority: 07.05.2001 IT TO20010423
(43) Date of publication of application: 11.12.2002
(73) Proprietor: PIBER GROUP S.r.l., 27058 Voghera (Pavia) (IT)
(72) Inventor: Bergaglio, Marco, I-27058 Voghera (IT)
(74) Representative: Cian, Paolo

(56) References cited:
- WO-A-02/085735
- US-A- 3 704 779
- PATENT ABSTRACTS OF JAPAN vol. 17, no. 569 (M-1496), 15 October 1993 (1993-10-15) -& JP 05 162763 A (YOSHINO KOGYOSHO CO LTD), 29 June 1993 (1993-06-29) -& DATABASE WPI Week 199330 Derwent Publications Ltd., London, GB; AN 1993-239747 XP002234725 & JP 05 162763 A
- PATENT ABSTRACTS OF JAPAN vol. 1996, no. 8, 30 August 1996 (1996-08-30) -& JP 08 091416 A (NAKAYAMA KOGYO KK), 9 April 1996 (1996-04-09)

## Description

The present invention relates to a method for producing a food package according to the preamble of claim 1.

A method of the type defined above is known from US-A-3704779.

In the catering industry the need often exists to present food to the final consumer accompanied by one or more suitable pieces of cutlery to facilitate its consumption also in unusual situations (during leisure time, in the office, on a trip etc).

This requirement is currently fulfilled by various solutions.

A first solution is to include in the package one or more pieces of cutlery (a fork, a knife, a spoon, a pair of chopsticks) already packaged in a wrapper, such as a small bag.

A second solution is to stick one or more pre-packaged pieces of cutlery on the outer wrapper of the container.

A third solution is to place one or more pieces of cutlery in a separate seat (a recess) of the package and then to confine it or them by a heat-welded protecting film.

A fourth solution, in the case of a package which includes a container for the food and a lid, is to confine a piece of cutlery by fitting it in a seat formed in the inner face of the lid of the package, whereby the piece of cutlery is located within the package and is therefore protected from the external atmosphere.

All the four known solutions mentioned above involve technical difficulties and costs which would be desirable to reduce.

In all these solutions it is necessary to find a piece of cutlery or a set of pieces of cutlery of the correct size and, if these do not exist on the market, it is necessary to make the moulds to produce them.

The first known solution is acceptable only for dry foods, but it is disliked by many consumers who do not like to find the packaged cutlery together with the food.

With regard to the second known solution, the risk exists that the glue does not hold and the pieces of cutlery stuck on the outside of the packages come off during distribution and get lost.

As regards the first and the second known solutions, it is necessary to pre-package the pieces of cutlery in a small bag or other wrapper to protect them from external agents.

With regard to all the four known solutions, automation of the positioning of the pieces of cutlery is not easy and economical, because normally they cannot be stacked in a magazine, especially if they are pre-packaged in a wrapper.

Moreover, especially in the case of the third and the fourth solutions, the automated placing in a seat or recess must be accurate and, if it is not carried out in an automated way, it must be carried out by hand with the risk of contaminating the cutlery or the food product.

The fourth solution is restricted to the use of a lid and therefore cannot be applied to simple plates or trays.

The object of the invention is to provide a method for producing a food package according to the preamble of claim 1, that avoids all the problems of the known solutions mentioned above.

According to the invention this object is attained by means of a method as claimed.

The invention also relates to the food packages obtained by the claimed method.

Thanks to the claimed solution it is possible to provide a food package which, in addition to a piece of tableware, such as a plate, a tray or a container lid, incorporates in a simple and economical manner one or more pieces of cutlery which are injection-moulded in a simple and economical manner together with the said piece of tableware.

The piece or pieces of tableware so obtained can be protected, until they are used, by a cover element of sheet material, which may be a label of paper or plastic material.

In the case of a package destined to be sold empty to the public or to be filled directly in a canteen or for a social event, the package according to the invention allows to rationalize the operations of preparation of the covers and to make sure that the necessary piece or pieces of cutlery correspond to each plate.

Preferably, the face of the piece of tableware (plate, tray or lid) on which the piece or pieces of cutlery are located and which is likely to come into direct contact with the fingers, is covered by a protecting film. This avoids in a practical and economic way the problem of the known solutions in which the pieces of cutlery are pre-packaged in individual wrappers.

Further characteristics and advantages of the invention will become clearer upon reading the detailed description which follows, made with reference to the attached drawings, given by way of not-limiting example and in which:
figure 1 is a plan view of a plate or tray of a food package which, by way of example, includes two receptacles for food and one fork,
figure 2 is an elevational view, partially in cross section, of the package of figure 1,
figure 3 is a schematic representation in cross section which shows the region of a mould in which the injection-moulding of the fork of figure 1 takes place, with the two half-moulds open apart in a phase which precedes the moulding,
figure 4 is a schematic representation analogous to that of figure 3, in the phase in which the plastic material has been injected in the cavities defined in the closed mould by the two half-moulds, and
figure 5 is a schematic representation in cross section according to line V - V of figure 1, which shows the region of the injection-moulded tray with its fork after it has been extracted from the mould and after it has been covered with a protecting film.

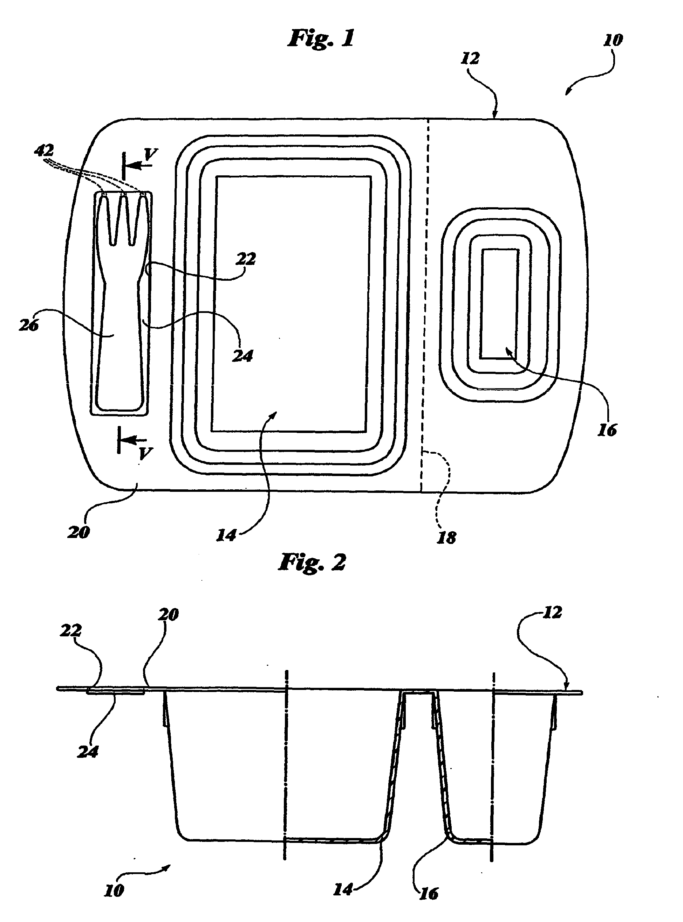

Referring to figures 1 and 2, the package shown includes a piece of tableware 10 in the form of a plate or tray of a plastic material for foodstuffs, such as for example polystyrene or polypropylene.

The piece of tableware 10 in the form of a plate or tray has a relatively thin, flat peripheral flange 12 within which are formed a large receptacle 14 and a small receptacle 16, which open in the upper face of the package.

The large receptacle 14 is for example adapted to contain morsels of a solid food and the small receptacle 16 is for example adapted to contain a flavouring sauce.

In figure 1 a dotted line 18 indicates a tear-off line which allows the consumer to separate the two receptacles if he wishes.

Numeral 20 indicates a flat border region of the flange 12 in which there is a window 22 formed by moulding, which has a substantially rectangular elongated shape.

The underside of the window 22 is closed by a bottom wall 24, which is described in more detail below.

A fork 26 is applied on the bottom wall 24 and is located within the contour of the window 22.

As can be better seen below, the fork 26 is obtained by injection-moulding along with the whole piece of tableware 10 in the form of a plate or tray.

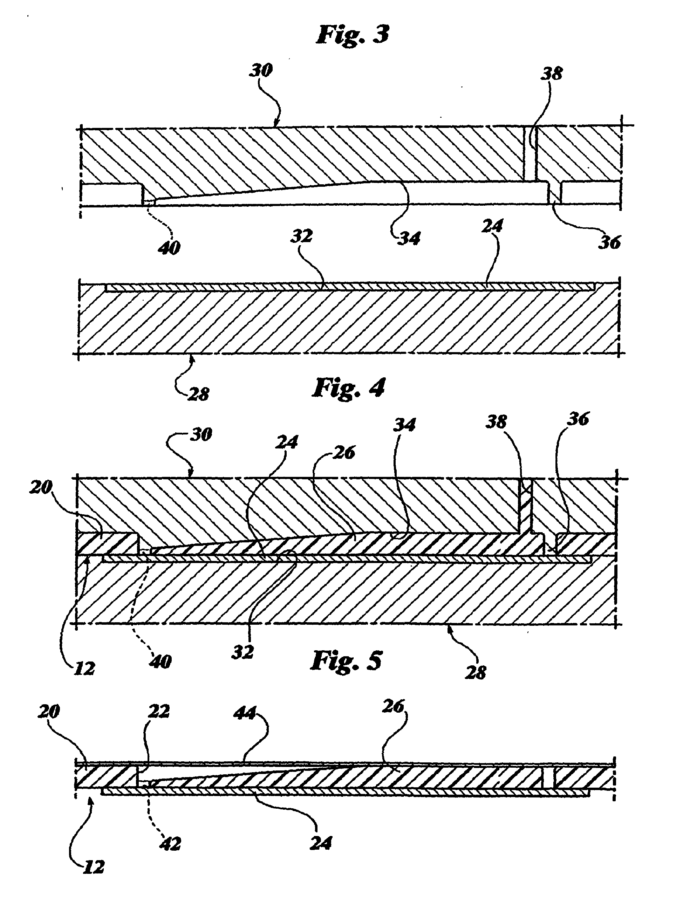

Reference to figures 3 to 5 will now be made to describe the method for producing the package of figures 1 and 2.

Referring in the first place to figure 3, a mould for the injection-moulding of the piece of tableware 10 in the form of a plate or tray of figures 1 and 2 comprises two half-moulds 28, 30.

In the flat border region 20 of the flange 12 the half-mould 28 has a flat face 32 which faces the other half-mould 30.

Opposite the flat face 32 the half-mould 30 has an imprint 34 of a shape which corresponds to that of the fork 26 of figure 1.

All around the imprint 34 the half-mould 30 has a projection 36 which is turned towards the flat face 32 of the half-mould 28 and which delimits the contour of the window 22 of figure 1 in which fork 26 is located.

In preparation for the injection-moulding of the piece of tableware 10 in the form of a plate or tray, before the closing of the mould a cover element of sheet material constituting the bottom wall 24 of the window 22, is applied onto the flat face 32.

The bottom wall 24 constituted by the cover element of sheet material is applied on the flat face 32 of the half-mould 28 in such a manner that the fork 26 will be on the face of the piece of tableware 10 in the form of a plate or tray which is turned towards the outside of the package, and will be protected from the external atmosphere by the bottom wall 24.

In this case the bottom wall 24 is preferably provided with wordings and/or pictures on its face that will remain visible under the flange 12.

Once the bottom wall 24 has been applied, the mould is closed as in figure 4, the plastic material is injected and the whole piece of tableware 10 in the form of a plate or tray and its fork 26 are formed at the same time.

The fork 26 is formed between the imprint 34 and the bottom wall 24, for example by injecting the fluid plastic material into the imprint 34 through an injection channel indicated by 38 in figures 3 and 4.

The injection channel 38 allows to separately inject into the imprint 34 a plastic material different from that of the piece of tableware 10 in the form of a plate or tray, for example of a different colour.

As an alternative, in order to form a fork 26 of the same material of the piece of tableware 10 in the form of a plate or tray, the fluid plastic material can be injected into the imprint 34 through channels, indicated at 40 by a broken line in figures 3 and 4, through which the imprint 34 communicates with the general cavity of the mould.

More particularly, the channels 40 can advantageously end at the tips of the teeth of the fork 26 in order to form bridges of solidified plastic material, indicated by dotted lines at 42 in figures 1 and 5, adapted to be broken by the consumer in order to detach the fork from the edge of window 22.

Apart from the bridges 42 which, as will be seen, may even be missing, thanks to the projection 36 the fork 26 is kept apart from the edge of the window 22.

If, to constitute the bottom wall 24, a material is chosen, for example a plastic material, which does not guarantee adhesion of the plastic material of the fork 26, the presence of breakable bridges such as 42, which may be located elsewhere than on the tips of the teeth, is necessary to make sure that the fork 26 remains in its place until the consumer decides to remove it.

If instead a suitable material with a surface of a relatively rough nature, especially paper, is used for the bottom wall 24, the fluid plastic material which will constitute the fork 26 will imprint itself between the bumps and will anchor itself by solidification, so that fork 26 will remain adherent to the bottom wall 24 until it is detached voluntarily by the consumer. In this case the breakable bridges 42 are not necessary.

Figure 5 shows the region of the fork 26 after the piece of tableware 10 in the form of a plate or tray has been taken out of the mould.

If the package is destined to be distributed empty to the public, it is preferable to cover it with a protecting film 44, preferably transparent, which can be heat-welded on the whole periphery of the flange 12 in order to hermetically seal all the inside of the package from the external atmosphere, as well as to prevent the fork 26 from being detached and removed by accident.

The same protecting film 44 can be applied or reapplied after the receptacles 14 and 16 have been filled with food, in order to isolate the food as well.

In the description referred to the attached drawings a specific embodiment has been considered by way of example in which a fork is accessible on the upper face of a piece of tableware in the form of a plate or tray having two receptacles.

It is understood that the method according to the invention is not limited to the production of packages such as the one described and shown, but extends to packages which may include any number of receptacles or the like, or even without receptacles. The method according to the invention also extends to the production of packages which include one or more pieces of cutlery of any kind, such as forks, knives, spoons or pairs of chopsticks.

In the case of packages without receptacles, the method according to the invention is applicable to the production of pieces of tableware such as lids for containers which contain or are adapted to contain food.

In this case reference may be made again to figures 3 to 5, considering figure 5 as if it were turned upside down with respect to the case shown in that figure.

In this case it is supposed that the piece of tableware 10 is in the form of a container lid rather than a plate or tray and that the flange 12 is the upper wall of the piece of tableware 10 in the form of a lid which covers the inside of the container.

In this case the bottom wall 24 constituting the cover element of sheet material is applied onto the surface 32 of the half-mould 28 which, this time, corresponds to the outer face of the piece of tableware 10 in the form of a lid.

The bottom wall 24 may cover in the manner of a label the whole visible upper face of the piece of tableware 10 in the form of a lid and be provided with wordings and/or pictures.

Referring to figure 5, after the injection-moulding of the piece of tableware 10 in the form of a lid and its fork 26 (or other piece of cutlery), the protecting film 44 is applied on the surface 32 of the half-mould 28 which corresponds to the inner face of the piece of tableware 10 in the form of a lid, so that the fork 26 (or other piece of cutlery) will be on the face of the piece of tableware 10 in the form of a lid turned towards the inside of the container and will be hermetically sealed by the bottom wall 24 both in respect of the external atmosphere, when the piece of tableware 10 in the form of a lid has not yet been used, and in respect of the food with which the container has been filled, when the piece of tableware 10 in the form of a lid closes the container before the food is consumed.

## Claims

1. A method for producing a food package which includes on the one hand a piece of tableware (10) of plastic material, such as a plate, a tray or a container lid, and on the other hand at least one piece of cutlery (26) of plastic material,
which method comprises the injection-moulding of the piece of tableware (10) in a mould, said mould being made up of two half-moulds (28, 30) which are so shaped as to form a piece of tableware (10) which has at least one relatively thin, flat region (20) with at least one window (22), of which one of the half-moulds (30) has, within said region (20) or within each region delimited by the window (22) or by each window, at least one imprint (34) of a shape corresponding to a piece of cutlery (26),
in which, when the moulding is carried out, a plastic material, which is identical to, or different from, the one which forms said piece of tableware (10), is injected into the imprint (34) or each imprint, between the latter and a bottom wall of the window (22), in order to form one or more pieces of cutlery (26)
**characterized in that**, before the mould is closed in preparation for the injection of the plastic material, a sheet material is applied onto the other half-mould (28) in the location of the window (22) or of each window as a cover element, to constitute the bottom wall (24) of such a window (22).

2. The method according to claim 1, **characterized in that** the or each piece of cutlery (26) is injection-moulded in such a manner that it is kept apart from the edge of the corresponding window (22), and that the sheet material of the bottom wall (24) is chosen in such a way as to ensure that the piece of cutlery (26) remains adherent to said bottom wall (24) of the window (22), but can be detached manually afterwards for the use of said piece of cutlery.

3. The method according to claim 1, **characterized in that** the imprint (34) or each imprint is formed so as to constitute, by the injection-moulding, bridges (42) of plastic material which connect the or each piece of cutlery (26) to the edge of the corresponding window (22) and which can be broken manually for the use of the piece of cutlery.

4. The method according to any of claims 1 to 3, **characterized in that** a mould is used which is so shaped as to form a piece of tableware (10) in the form of a plate or a tray, and the bottom wall (24) is applied on a surface of one of the half-moulds (28) which corresponds to the lower face of the piece of tableware (10) in the form of a plate or a tray, so that the or each piece of cutlery (26) will be accessible on the upper face of the piece of tableware (10) in the form of a plate or a tray.

5. The method according to claim 4, **characterized in that** a mould is used whose half-moulds (28, 30) are shaped so as to form a piece of tableware (10) in the form of a plate or a tray in which there are formed, by moulding, at least one receptacle (14, 16) to be filled with food and said at least one flat region (20) which includes at least one window (22), and **in that** one of the half-moulds (30) has, in the location of the window (22), at least one imprint (34) whose shape corresponds to that of at least one piece of cutlery (26).

6. The method according to claim 4 or 5, **characterized in that**, after the injection-moulding and the possible filling of the piece of tableware (10) in the form of a plate or a tray with food, the upper face of the piece of tableware (10) in the form of a plate or a tray is covered with a protecting film (44) in order to hermetically seal the piece or pieces of cutlery (26) and the possible food from the external atmosphere.

7. The method according to any of claims 1 to 3, **characterized in that** a mould is used whose half-moulds (28, 30) are so shaped as to form a piece of tableware (10) in the form of a lid for a container, and said bottom wall (24) of sheet material is applied on a surface of one of the half-moulds (28) which corresponds to the outer face of the piece of tableware (10) in the form of a lid, so that the or each piece of cutlery (26) will be on the face of the piece of tableware (10) in the form of a lid which is turned towards the inside of the container and will be protected from the external atmosphere by the bottom wall (24).

8. The method according to claim 7, **characterized in that**, after the injection-moulding, the face of the piece of tableware (10) in the form of a lid which will be turned towards the inside of the container is covered with a protecting film (44) in order to hermetically seal the piece or pieces of cutlery (26) with respect to the food contained in the container.

## Patentansprüche

1. Verfahren zum Herstellen einer Lebensmittelverpackung, die einerseits ein Geschirrteil (10) aus Kunststoff, beispielsweise einen Teller, eine Schale oder einen Behälterdeckel, und andererseits wenigstens ein Besteckteil (26) aus Kunststoff umfaßt, wobei bei dem Verfahren das Geschirrteil (10) durch Spritzguß in einer Form erzeugt wird, die aus zwei Formhälften (28, 30) besteht, die so ausgebildet sind, daß ein Geschirrteil (10) mit wenigstens einem verhältnismäßig dünnen, flachen Bereich (20) mit wenigstens einem Fenster (22) geformt wird, wobei eine Formhälfte (30) innerhalb des genannten Bereiches (20) oder jedes von dem Fenster (22) oder von jedem Fenster begrenzten Bereiches wenigstens einen Formraum (34) hat, dessen From derjenigen eines Besteckteils (26) entspricht, wobei beim Spritzgußvorgang in den Formraum (26) oder jeden Formraum zwischen diesen und eine Bodenwand (24) des Fensters (22) ein Kunststoff eingespritzt wird, der identisch mit demjenigen des Geschirrteils (10) oder von diesem verschieden ist, wodurch ein oder mehrere Besteckteile (26) gebildet werden,
**dadurch gekennzeichnet, daß** vor dem Schließen der Form zur Vorbereitung des Einspritzens des Kunststoffes eine Materialbahn auf die andere Formhälfte (28) im Bereich des Fensters (22) oder jedes Fensters als Abdeck-element gelegt wird, das die Bodenwand (24) für dieses Fenster (22) bildet.

2. Verfahren nach Anspruch 1, **dadurch gekennzeichnet, daß** jedes Besteckteil (26) durch Spritzguß so geformt wird, daß es von dem Rand des zugehörigen Fensters (22) getrennt ist, und daß die Materialbahn für die Bodenwand (24) so gewählt wird, daß gewährleistet wird, daß das Besteckteil (26) an der Bodenwand (24) des Fensters (22) anliegt, jedoch anschließend für den Gebrauch des Besteckteils manuell abgenommen werden kann.

3. Verfahren nach Anspruch 1, **dadurch gekennzeichnet, daß** der Formraum (34) oder jeder Formraum so ausgebildet ist, daß er beim Spritzgießen Stege (42) für den Kunststoff bildet, die jedes Besteckteil (26) mit dem Rand des entsprechenden Fensters (22) verbinden und die für den Gebrauch des Besteckteils manuell gebrochen werden können.

4. Verfahren nach einem der Ansprüche 1 bis 3, **dadurch gekennzeichnet, daß** eine Form verwendet wird, die so ausgebildet ist, daß in ihr ein Geschirrteil (10) in Form eines Tellers oder einer Schale geformt wird, und daß die Bodenwand (24) auf eine Oberfläche der einen Formhälfte (28) aufgebracht wird, die der Unterseite des Geschirrteils (10) in Form eines Tellers oder einer Schale entspricht, so daß das oder jedes Besteckteil (26) auf der Oberseite des Geschirrteils (10) in Form eines Tellers oder einer Schale zugänglich ist.

5. Verfahren nach Anspruch 4, **dadurch gekennzeichnet, daß** eine Form verwendet wird, deren Formhälften (28, 30) so ausgebildet sind, daß sie ein Geschirrteil (10) in Form eines Tellers oder einer Schale bilden, in das durch Spritzguß wenigstens eine Mulde (14, 16) eingeformt wird, die mit einem Lebensmittel gefüllt werden kann, daß wenigstens ein flacher Bereich (20) mit wenigstens einem Fenster (22) geformt wird, und daß die eine Formhälfte (30) im Bereich des Fensters (22) wenigstens einen Formraum (34) hat, dessen Form dem wenigstens einen Besteckteil (26) entspricht.

6. Verfahren nach Anspruch 4 oder 5, **dadurch gekennzeichnet, daß** nach dem Spritzguß und nach dem möglichen Füllen des Geschirrteils (10) in Form eines Tellers oder einer Schale mit Lebensmitteln die Oberseite des Geschirrteils (10) in Form eines Tellers oder einer Schale mit einer Schutzfolie (44) abgedeckt wird, um das Besteckteil oder die Besteckteile (26) und den möglichen Lebensmittelinhalt gegen die Außenatmosphäre hermetisch abzudichten.

7. Verfahren nach einem der Ansprüche 1 bis 3, **dadurch gekennzeichnet, daß** eine Form verwendet wird, deren Formhälften (28, 30) so ausgebildet sind, daß sie ein Geschirrteil (10) in Form eines Deckels für einen Behälter bilden, und daß die Bodenwand (24) aus der Materialbahn auf eine Oberfläche der einen Formhälfte (28) aufgelegt wird, die der Außenfläche des Geschirrteils (10) in Form eines Deckels entspricht, so daß das oder jedes Besteckteil (26) auf der jenigen Seite des Geschirrteils (10) in Form eines Deckels liegt, die in das Innere des Behälters weist und durch die Bodenwand (24) gegen die Außenatmosphäre geschützt ist.

8. Verfahren nach Anspruch 7, **dadurch gekennzeichnet, daß** nach dem Spritzgießen die Seite des Geschirrteils (10) in Form eines Deckels, die zur Innenseite des Behälters gerichtet ist, mit einer Schutzfolie (44) abgedeckt wird, um das Besteckteil oder die Besteckteile (26) gegen die in den Behälter aufgenommenen Lebensmittel hermetisch abzudichten.

## Revendications

1. Procédé pour produire un emballage pour produits alimentaires qui comprend, d'une part, un article de vaisselle (10) en matériau plastique, tel qu'une assiette, un plateau ou un couvercle de récipient, et d'autre part, au moins un article de coutellerie (26) en matériau plastique, lequel procédé comprend le moulage par injection de l'article de vaisselle (10) dans un moule, ledit moule étant composé de deux demi-moules (28, 30) qui sont conformés pour mettre en forme un article de vaisselle (10) qui comprend au moins une région plate (20) relativement mince avec au moins une fenêtre (22), l'un des demi-moules (30) comprenant, dans ladite région (20) ou dans chaque région délimitée par la fenêtre (22) ou par chaque fenêtre, au moins une empreinte (34) ayant une forme correspondant à un article de coutellerie (26), dans lequel, lorsque le moulage est réalisé, un matériau plastique, qui est identique à celui qui forme ledit article de vaisselle (10), ou différent de celui-ci, est injecté dans l'empreinte (34) ou chaque empreinte, entre cette dernière ou ces dernières et une paroi de fond de la fenêtre (22), afin de former une ou plusieurs pièces de coutellerie (26),**caractérisé en ce que**, avant que le moule soit refermé en vue de l'injection du matériau plastique, une feuille de matériau est appliquée sur l'autre demi-moule (28) à l'emplacement de la fenêtre (22) ou de chaque fenêtre en tant qu'élément de couverture, pour constituer la paroi de fond (24) d'une telle fenêtre (22).

2. Procédé selon la revendication 1, **caractérisé en ce que** l'article ou chaque article de coutellerie (26) est moulé par injection de telle manière qu'il est maintenu séparé du bord de la fenêtre correspondante (22), et **en ce que** la feuille de matériau de la paroi de fond (24) est choisie de façon à s'assurer que l'article de coutellerie (26) demeure adhérent à ladite paroi de fond (24) de la fenêtre (22), mais peut être ultérieurement détaché manuellement pour l'utilisation de ladite pièce de coutellerie.

3. Procédé selon la revendication 1, **caractérisé en ce que** l'empreinte (34) ou chaque empreinte est formée de manière à constituer, par le moulage par injection, des ponts (42) en matériau plastique qui relient l'article ou chaque article de coutellerie (26) au bord de la fenêtre (22) correspondante et qui peuvent être rompus manuellement pour l'utilisation de l'article de coutellerie.

4. Procédé selon l'une quelconque des revendications 1 à 3, **caractérisé en ce qu'**un moule est utilisé, étant conformé pour mettre en forme un article de vaisselle (10) sous la forme d'une assiette ou d'un plateau, et la paroi de fond (24) est appliquée sur une surface de l'un des demi-moules (28) qui correspond à la face inférieure de l'article de vaisselle (10) sous forme d'une assiette ou d'un plateau, de sorte que le ou chaque article de coutellerie (26) soit accessible sur la face supérieure de l'article de vaisselle (10) sous la forme d'une assiette ou d'un plateau.

5. Procédé selon la revendication 4, **caractérisé en ce qu'**un moule est utilisé, dont les demi-moules (28, 30) sont conformés pour mettre en forme un article de vaisselle (10) sous la forme d'une assiette ou d'un plateau, dans lesquels sont formés, par moulage, au moins un récipient (14, 16) destiné à être rempli de nourriture et ladite au moins une région plate (20) qui comprend au moins une fenêtre (22), et **en ce que** l'un des demi-moules (30) comprend, au niveau de l'emplacement de la fenêtre (22), au moins une empreinte (34) dont la forme correspond à celle d'au moins une pièce de coutellerie (26).

6. Procédé selon la revendication 4 ou 5, **caractérisé en ce que**, après le moulage par injection et le remplissage éventuel avec de la nourriture de l'article de vaisselle (10) sous la forme d'une assiette ou d'un plateau, la face supérieure de l'article de vaisselle (10) sous la forme d'une assiette ou d'un plateau est recouverte d'un film protecteur (44) afin de séparer hermétiquement l'article ou les articles de coutellerie (26) et la nourriture éventuelle de l'atmosphère extérieure.

7. Procédé selon l'une quelconque des revendications 1 à 3. **caractérisé en ce qu'**un moule est utilisé, dont les demi-moules (28, 30) sont conformés pour mettre en forme un article de vaisselle (10) sous la forme d'un couvercle pour un récipient, et **en ce que** ladite paroi de fond (24) de la feuille de matériau est appliquée sur une surface de l'un des demi-moules (28) qui correspond à la face extérieure de l'article de vaisselle (10) sous la forme d'un couvercle, de sorte que l'article ou chaque article de coutellerie (26) soit sur la face de l'article de vaisselle (10) sous la forme d'un couvercle qui est tournée vers l'intérieur du récipient et soit protégé de l'atmosphère extérieure par la paroi de fond (24).

8. Procédé selon la revendication 7, **caractérisé en ce qu'**après le moulage par injection, la face de l'article de vaisselle (10) sous forme d'un couvercle, qui sera tournée vers l'intérieur du récipient, est recouverte d'un film protecteur (44) afin de sceller hermétiquement l'article ou les articles de coutellerie (26) par rapport à la nourriture contenue dans le récipient.
